# EUROPÄISCHE PATENTSCHRIFT

(11) **EP 1 613 811 B1**
(45) Veröffentlichungstag und Bekanntmachung des Hinweises auf die Patenterteilung: **24.06.2009**
(21) Anmeldenummer: 04724262.3
(22) Anmeldetag: 30.03.2004
(51) Int. Cl.: E01B 25/32, H02K 41/02

(54) **FAHRWEG FÜR EIN SPURGEBUNDENES FAHRZEUG MIT EINEM WENIGSTENS EINEN LANGSTATOR AUFWEISENDEN LANGSTATOR-LINEARANTRIEB SOWIE EINEN BAUSATZ UND EIN STATORPAKET ZU SEINER HERSTELLUNG**
TRACK FOR A RAILBORNE VEHICLE, COMPRISING A LONG-STATOR LINEAR DRIVE COMPRISING AT LEAST ONE LONG STATOR, AND A KIT AND A STATOR PACKET FOR THE PRODUCTION THEREOF
VOIE POUR VEHICULE GUIDE SUR RAILS COMPRENANT UN MOTEUR LINEAIRE A STATOR LONG PRESENTANT AU MOINS UN STATOR LONG, ENSEMBLE DE PIECES ET EMPILAGE DE TOLES DE STATOR POUR PRODUIRE CETTE VOIE

(30) Priorität: 11.04.2003 DE 10317014
(43) Veröffentlichungstag der Anmeldung: 11.01.2006
(73) Patentinhaber: Max Bögl Bauunternehmung GmbH & Co. KG, 92301 Neumarkt (DE)
(72) Erfinder: REICHEL, Dieter, 92318 Neumarkt (DE); FRISCH, Theo, 92355 Velburg (DE); WAIDHAUSER, Ralf, 92318 Neumarkt (DE)
(74) Vertreter: Bergmeier, Werner
(86) Internationale Anmeldenummer: PCT/EP2004/003330
(87) Internationale Veröffentlichungsnummer: WO 2004/090229

(56) Entgegenhaltungen:
- WO-A-20/04044329
- US-A- 4 665 329

## Beschreibung

Die Erfindung betrifft einen Fahrweg für ein spurgebundenes Fahrzeug mit einem wenigstens einen Langstator aufweisenden Langstator-Linearantrieb, mit einer Vielzahl von längs einer Trasse angeordneten Fahrwegelementen, umfassend einen Träger, wenigstens ein an dem Träger angeordnetes Funktionsteil, wobei das Funktionsteil wenigstens einen längs der Trasse angeordneten Statorträger zur Aufnahme eines Statorabschnittes aufweist und der Statorabschnitt aus Statorpaketen mit einem vorderen und einem hinteren Stoßende zusammengesetzt ist sowie einen Bausatz und ein Statorpaket zu seiner Herstellung.

Fahrwege für spurgebundene Fahrzeuge bestehen aus einer Vielzahl von längs der Trasse aufeinander folgenden Fahrwegelementen, an denen weitere Ausrüstungsteile angeordnet sind, die für den Betrieb der Fahrzeuge, insbesondere das Tragen, Führen, Antreiben und Bremsen benötigt werden. Beispielsweise weisen Fahrwegelemente für Magnetschwebebahnen einen Träger auf, an dem Flächen zur Seitenführung und zum Absetzen des Fahrzeuges sowie die Primärkomponenten des Linearantriebs montiert sind.

Bei einem eisenbehafteten synchronen Langstator-Linearmotor umfasst die Primärkomponente eine Vielzahl von längs der Trasse angeordneten Statorpaketen, welche fortlaufend abwechselnd mit Zähnen und Nuten versehen sind, in die eine ein- oder mehrphasige Wechselstromwanderfeldwicklung eingelegt ist. Die Sekundärkomponente ist im Fahrzeug untergebracht und umfasst Magnete, welche üblicherweise als Elektromagnete ausgeführt sind und einerseits das Erregerfeld des Motors erzeugen und andererseits als Tragmagnete für das Fahrzeug wirken. Die Statorpakete dienen dabei als Anker für die Erzeugung der Tragkraft und sind zur Unterdrückung von Wirbelströmen aus gegeneinander isolierten Statorblechen zusammengesetzt.

Derartige Fahrwege sind beispielsweise aus der DE 197 35 471 C1 bekannt. Die Statorpakete bestehen aus einzelnen Blechen und weisen eine quaderförmige Grundform auf. Befestigt sind die Statorpakete an einem gurtartigen Statorträger, wozu beidseitig sowie formschlüssig in Hinterschnitte aufweisende Nuten greifende traversenartige Verbindungselemente sowie Schraubbolzen und Muttern vorgesehen sind.

Bei derartigen Anordnungen wird der Langstator durch eine Kette von hintereinander liegenden Statorpaketen gebildet, wobei zwischen benachbarten Statorpaketen ein Spalt auftritt. Bei einem Fahrweg, der entlang einer Geraden verläuft, ergibt sich die materielle Spaltbreite aus einem Dehnungsspaltanteil sowie einen Montagespaltanteil. Die Breite des Dehnungsspaltes beträgt dabei typischerweise einige Millimeter, die typische Breite eines Montagespaltes beträgt einige Zehntel Millimeter. Hinzu kommt, dass die aus einzelnen Blechen zusammengesetzten Statorpaketen üblicherweise über eine Korrosionsschutzschicht von z. B. ein bis zwei Millimeter Dicke umgeben sind. Die wirksame Magnetspaltbreite ergibt sich somit aus der Addition der doppelten Dicke der Korrosionsschutzschicht und des materiellen Spaltes.

Bei den üblichen Linearantrieben mit mehreren Langstatoren ergibt sich bei gekrümmten Fahrwegabschnitten das zusätzliche Problem, dass die Statorlinien in der Innenkurve kürzer sind, als die in der Außenkurve. Bei der aus Konstruktions- und Kostengründen bevorzugten Verwendung von Statorpaketen einer einheitlichen Länge, ergeben sich so zusätzliche Spaltanteile. Gerade bei der Herstellung von Fahrwegen mit mehreren Fahrspuren tritt das Problem der Kurvenspalte verstärkt auf. Die materielle Spaltbreite ergibt sich hier aus der Summe des Dehnungsspalts, des Montagespalts und des Kurvenspalts, die wirksame Magnetspaltbreite aus der materiellen Spaltbreite und der doppelten Dicke der Korrosionsschutzschicht.

Derartige magnetische Spalte bewirken allgemein eine Erhöhung des magnetischen Widerstandes in einem Magnetkreis. Ausgehend von einem konstanten das Magnetfeld erzeugenden Strom ergibt sich so eine geringere magnetische Induktion und damit eine geringere elektromagnetische Kraftwirkung. Im Fahrbetrieb einer Magnetschwebebahn mit Langstatorantrieb bewirken die Magnetspalte zwischen zwei Statorpaketen zu schnellen periodischen Änderungen der Trag- und Antriebskräfte. Als Folge davon können Teile des Fahrweges oder des Fahrzeuges zu unerwünschten Schwingungen angeregt werden. Derartige Schwingungen können beispielsweise die Lebensdauer von Systemelementen, aber auch den Fahrkomfort und die Schallerzeugung negativ beeinflussen.

Aus der DE 199 34 912 A1 ist ein Fahrweg bekannt, bei dem mittels unterschiedlich langer Statorpakete die Magnetspalte bei gekrümmten Fahrwegabschnitten minimiert werden. Nachteilig bei diesem Fahrweg ist jedoch der hohe Aufwand bei der Herstellung der Statorpakete einerseits und andererseits bei der Projektierung und beim Bau einer Trasse. Zudem verbleibt bei dem beschriebenen Fahrweg ein magnetisch wirksamer Spalt, welcher der Addition des Dehnungsspaltes, des Montagespaltes und der doppelten Dicke der Korrosionsschutzschicht entspricht.

Bezüglich der Positionierung von Statorpaketen bei Fahrwegen der hier interessierenden Art bestehen enge Toleranzforderungen, da im Fahrbetrieb der Abstand von dem am Fahrzeug befestigten Trag- und Erregermagneten sowie der Unterseite der Statorpakete nur wenige Millimeter beträgt. Bei bekannten Fahrwegen sind die einzelnen Statorpakete individuell an einem Funktionsteil oder an einem Statorträger beispielsweise durch Verklebung, Verschweißung, Verschraubung, Vernietung und/oder durch andere Verbindungen befestigt. Die einzelnen Statorpakete verfügen dabei über keine Verbindung untereinander. Der zulässige Seiten- und Höhenversatz benachbarter Statorpakete liegt im engsten Millimeterbereich. Bei der bekannten individuellen Befestigung der Statorpakete an einem Statorträger oder am Funktionsteil ergibt sich somit ein hoher Konstruktions- und Montageaufwand zur Einhaltung der geforderten engen Toleranzen.

In der US-A-4665329 ist ein Langstatorpaket für eine Magnetschwebebahn offenbart, welcher an einem Ende eine Aussparung und an dem korrespondierenden anderen Ende eine entsprechende Verlängerung in Form einer Nut und einer Feder aufweist. Durch die eine Nut und die eine Feder werden benachbarte Langstatorpakete formschlüssig aneinandergereiht und miteinander verklammert. Bei einer Überfahrt des Fahrzeuges ergibt sich hierbei eine mechanische Kraftverteilung auf benachbarte Statorpakete.

Aufgabe der vorliegenden Erfindung ist es somit, die genannten Nachteile zu vermeiden.

Die Aufgabe wird gelöst durch einen Fahrweg, einen Bausatz und einen Statorpaket mit den Markmalen der unabhängigen Ansprüche.

Ein erfindungsgemäßer Fahrweg für ein spurgebundenes Fahrzeug mit einem wenigstens einen Langstator aufweisenden Langstator-Linearantrieb besteht aus einer Vielzahl von längs einer Trasse angeordneten Fahrwegelementen. Die einzelnen Fahrwegelemente umfassen einen Träger und wenigstens ein daran angeordnetes Funktionsteil, welches mindestens einen längs der Trasse angeordneten Statorträger zur Aufnahme wenigstens eines Statorabschnittes aufweist. Ein Statorabschnitt umfasst wenigstens ein, in der Regel jedoch mehrere Statorpakete, mit einem vorderen und hinteren Stoßende. Das Funktionsteil mit Statorträger, Statorabschnitten und Statorpaketen kann vormontiert und an der Baustelle an den beispielsweise Beton- oder Stahlträger angebaut werden. Erfindungsgemäß ist vorgesehen, dass die Längserstreckung des vorderen Stoßendes eines Statorpaketes eine aus einer Querschnittebene der Statorpakete herausragende räumliche Kontur und die Längserstreckung des hinteren Stoßendes eines Statorpaketes eine mit der Kontur korrespondierende räumliche Gegenkontur aufweist. Unter dem vorderen Stoßende eines Statorpaketes sei dasjenige Stoßende verstanden, welches in die eine Richtung der Fahrtrasse weist und unter dem hinteren Stoßende eines Statorpaketes sei dasjenige Stoßende verstanden, welches in die jeweils entgegengesetzte Richtung weist. Werden nun Statorabschnitte mit erfindungsgemäß ausgeformten Statorpaketen zu einem Langstator zusammengesetzt, so überlappen sich benachbarte Statorpakete in Längsrichtung.

Unter Verwendung entsprechender Trag- und Führmittel können so Fahrwege für beliebige spurgebundene Fahrzeuge mit einem Langstator-Linearantrieb realisiert werden. Die Erfindung kann beispielsweise bei Systemen eingesetzt werden, die auf dem herkömmlichen Rad-Schiene-Prinzip beruhen. Dabei kann der Fahrweg einen oder mehrere parallele Langstatoren aufweisen. Bevorzugt kann ein erfindungsgemäßer Fahrweg bei Magnetschwebebahnen, welche auf dem Prinzip des elektromagnetischen Schwebens beruhen, eingesetzt werden. Zur Erzielung eines stabilen Schwebezustandes werden hierbei mehrere parallel verlegte Langstatoren vorgesehen. Im Regelfall wird dabei auf der linken und rechten Fahrbahnseite jeweils ein Langstator angeordnet.

Bei einem erfindungsgemäßen Fahrweg überlappen sich benachbarte Statorpakete einer Statorlinie durch eine entsprechende Ausformung des vorderen Stoßendes sowie eine korrespondierende Ausformung des hinteren Stoßendes. Bei gleichbleibender Dicke der Korrosionsschutzschicht und des in Längsrichtung gemessenen materiellen Spaltes ergibt sich so eine Verringerung des magnetischen Widerstandes im Spaltbereich. Dies kann als eine Verringerung der wirksamen Magnetspaltbreite aufgefasst werden, ohne dass dabei die notwendigen Dehnungsspalte, Kurvenspalte und/oder Montagespalte sowie die Dicke der Korrosionsschutzschicht verändert werden müssten.

Bei einer Überlappung benachbarter Statorpaketen verläuft nun zumindest ein Teil der den Spalt überwindenden Magnetfeldlinien quer zur Längsrichtung. Die Feldlinien haben dabei einen geringeren Weg außerhalb der Blechpakete zu überbrücken. Beispielsweise wird der Abstand von Blechpaketen in Bereich von senkrecht zu einer Querschnittsebene verlaufenden Flanken lediglich durch die doppelte Dicke der Korrosionsschutzschicht bestimmt. Die Verringerung des magnetischen Widerstandes beruht nun auf den ferromagnetischen Eigenschaften der üblicherweise verwendeten Statorbleche. Ferromagnetische Stoffe weisen einen magnetischen spezifischen Widerstand auf, der um den Faktor 50 bis 180 000 kleiner ist, als der spezifisch magnetische Widerstand von Luft. Selbst wenn man nun berücksichtigt, dass die magnetischen Feldlinien bei der interessierenden Anordnung aufgrund ihrer Querkomponente einen geringfügig längeren Weg zurückzulegen haben, so sinkt doch aufgrund der ferromagnetischen Werkstoffe der resultierende magnetische Widerstand. Der genaue Wert des magnetischen Übergangswiderstandes hängt dabei im wesentlichen von der Geometrie und der Art der verwendeten Werkstoffe ab.

Für das durch die Primärkomponente des Langstatorlinearmotors erzeugte Wanderfeld bedeutet dies einen gleichförmigeren Verlauf der magnetischen Induktionsdichte und daraus resultierend eine Vergleichmäßigung der Antriebskräfte im räumlich-zeitlichen Verlauf. Es kommt also im Fahrbetrieb zu einer deutlichen Verringerung der periodischen Schwankungen der Antriebskräfte. Bei Magnetschwebebahrien gelten diese Überlegungen analog für die Felder und Kräfte der Tragmagnete. Insgesamt lässt sich also das Auftreten von sich periodisch ändernden Schwankungen der Antriebs- und Tragkräfte durch die Überlappung benachbarter Statorpakete wirksam verringern. Hierdurch verringert sich automatisch die Gefahr, dass Teile des Fahrweges oder des Fahrzeuges in Schwingung versetzt werden, die sich negativ auf den Fahrkomfort, die Geräuschentwicklung und/oder die Haltbarkeit der Systeme oder Systemteile auswirken würden. Dieser Vorteil ist insbesondere bei Magnetschwebebahnen im Hochgeschwindigkeitsbereich bedeutsam, da die Frequenzen der hier angeregten Schwingungen im unteren Schallbereich liegen. Bei einer Geschwindigkeit von 360 km/h und einer Statorpaketlänge von 1 m ergibt sich beispielsweise eine Frequenz von rund 100 Hz. Weist nun, was nicht unwahrscheinlich ist, irgendeine Systemkomponente genau diese Frequenz als Resonanzfrequenz auf, so treten die genannten Vorteile besonders hervor.

Ein weiterer Vorteil ergibt sich nun daraus, dass sowohl die Tragmagnete als auch die Wanderfeldwicklungen zur Erzielung der gleichen mittleren Kraftwirkung mit einem geringeren Strom beaufschlagt werden müssen. Hierdurch ergeben sich geringere Verlustleistungen, wie z. B. ohmsche Verlustleistungen in den Wicklungen und deren Zuleitungen. Insgesamt ergibt sich also eine verbesserte Energiebilanz.

Ein weiterer Vorteil der Erfindung zeigt sich bei der Montage der Statorpakete am Statorträger. Bevor die Statorpakete durch Verklebung, Verschweißung, Verschraubung, Vernietung und/oder in anderer Weise mit dem Statorträger verbunden werden kann, müssen die Teile relativ zueinander positioniert und fixiert werden. Erfindungsgemäße Konturen der Stoßenden der Statorpakete können dabei so ausgestaltet werden, dass sie sowohl als Führung zum Positionieren der Statorpakete, als auch zum Fixieren in Montagelage dienen können.

Weiterhin kann durch eine entsprechende Konturierung eine Redundanz der Befestigung der Statorpakete erzielt werden. Die Konturierung kann so ausgebildet sein, dass das Statorpaket beim Bruch einer oder mehrerer Aufhängungen einer Lage innerhalb der geforderten Toleranz, zumindest vorübergehend, verbleibt. Hierdurch kann im Fahrbetrieb die Berührung eines Fahrzeuges mit einem teilgelösten Statorpaket vermieden und Unfälle verhindert werden. Bei der nächsten Routineuntersuchung des Fahrweges kann dann der Fehler behoben werden.

Benachbarte Statorpakete sind so miteinander verzahnt, dass bei Versagen der Aufhängung eines Statorpaketes dieses Statorpaket auf die Verzahnung des anderen Statorpaketes absackt und den Fehler dadurch offenbart, so ist es für die Kontrolle des Fahrweges und den sicheren Fahrbetrieb sehr vorteilhaft. Die Verzahnung kann dabei in ihrer Geometrie so bemessen sein, dass sich das Statorpaket gezielt um ein vorbestimmtes Maß, beispielsweise 4 mm absenkt. Dieser geometrische Versatz kann bei der Überfahrt des Fahrzeuges detektiert und von Monteuren gezielt repariert werden.

Die Kontur und die Gegenkontur weisen zur Bildung einer Verzahnung korrespondierende Vertiefungen und Erhöhungen auf. Bei der Montage der Statorpakete an dem Statorträger kann eine Verzahnung als Führung und Fixierung der Statorpakete dienen.

Besonders vorteilhaft ist es, wenn die Gegenkontur eines Statorpaketes durch eine Parallelverschiebung entlang der Längsachse aus der Kontur abgeleitet ist. Unter Berücksichtigung der erforderlichen Spaltbreite in Längsrichtung ergibt sich so für jede beliebige Kontur und Gegenkontur der geringste mögliche magnetische Widerstand.

Statorpakete, deren Kontur und Gegenkontur parallele ebene Schrägflächen bilden, sind besonders einfach herzustellen. Um die Querachse verdrehte ebene Flächen können z. B. durch die Verwendung gleicher trapezförmiger Statorbleche erzielt werden. Um die Hochachse verdrehte Schrägflächen können zumindest näherungsweise durch die Verwendung unterschiedlich langer Statorbleche oder die Versetzte Anordnung gleich langer Statorbleche gebildet werden.

Grundsätzlich können Kontur und Gegenkontur auch gekrümmte Elemente aufweisen. Es ist jedoch aus fertigungstechnischen Gründen vorzuziehen, wenn die Konturen durch eine oder mehrere ebene Flächen begrenzt sind.

Kontur und Gegenkontur können beispielsweise als korrespondierende Treppenprofile ausgeformt sein. Ein derartiges Profil ist einfach herzustellen, kann jedoch eine starke Überlappung aufweisen.

Eine vertikal wirkende Verzahnung, deren Flanken im wesentlichen parallel zur Fahrebene verlaufen, kann eine Verschiebung benachbarter Statorpakete entlang der Hochachse verhindern. Dies ist sowohl bei der Montage als auch im Fahrbetrieb erwünscht.

Weist die Kontur und die Gegenkontur eine vertikal wirkende Verzahnung auf deren Flanken im wesentlichen parallel zur Fahrebene verlaufen, so wird eine Verschiebung benachbarter Stoßenden relativ zueinander entlang der Querachse verhindert.

Vorteilhafterweise kann auch eine Verzahnung vorgesehen sein, die horizontal und vertikal wirkt. Hierbei sind Flanken vorgesehen, die oder deren gedachte Verlängerung sich kreuzen. Hierdurch wird eine besonders gute Fixierung bei der Montage und im späteren Fahrbetrieb erreicht.

Je nachdem wie die Statorpakete am Statorträger befestigt werden, kann es auch sinnvoll sein, dass die Kontur und Gegenkontur so ausgebildet sind, dass eine in Längsrichtung wirkende Verkrallung erzielt wird. Dies kann durch zumindest teilweise hintergreifende Flanken bewirkt werden. Die hintergreifenden Flanken können dabei ein Spiel aufweisen, so dass die Funktion des Dehnspaltes erhalten bleibt.

Sind die Kontur und die Gegenkontur so ausgeformt, dass sie durch eine Drehung um die Hochachse des Statorpaketes jeweils ineinander überführbar sind, so ergibt sich der Vorteil, dass bei der Montage die Unterscheidung des vorderen und des hinteren Stoßendes entfällt.

Vorteilhafterweise können die Kontur und die Gegenkontur korrespondierende Vertiefungen und Erhöhungen aufweisen, die nach Art eines Schachbrettes angeordnet sind. Hierdurch lässt sich eine vertikal und horizontal wirkende Verzahnung realisieren, bei der die Montage nicht nach dem vorderen und hinteren Stoßende unterschieden werden muss.

Zur Erleichterung der Montage können die Flächen und Kanten der Kontur und Gegenkontur über Abschrägungen und/oder Fasen verfügen.

Vorteilhafterweise werden die Kontur und die Gegenkontur so ausgeformt, dass benachbarte und überlappende Statorpakete bzgl. der Hoch-, Quer- und/öder Längsachse gegeneinander verdrehbar sind. Hierdurch werden Spannungen im Langstator vermieden, die bei der Einleitung einer Steigung, einer überhöhten oder einer nicht überhöhten Kurve auftreten können.

Weiterhin kann es vorteilhaft sein, wenn der materielle Spalt zwischen benachbarten Statorpaketen innerhalb eines Statorabschnittes eine andere Breite aufweist, als die Breite des materielle Spaltes zwischen benachbarten Statorpaketen aneinander grenzender Statorabschnitte. Dies kann z. B. der Fall sein, wenn die einzelnen Statorabschnitte in einem Werk an dem Statorträger vormontiert werden und die Statorträger mit den Statorpaketen im Verlauf der Trasse an den Träger befestigt werden. Hierbei ist es vorteilhaft, wenn die Spaltbreiten im Stoßbereich verschiedener Statorträger zur Erleichterung der Montage größer gewählt werden.

Ebenso kann es sinnvoll sein, entsprechend der Lage in einem Statorabschnitt unterschiedliche Spaltformen vorzusehen.

Besonders vorteilhaft ist es, wenn die räumliche Kontur und die korrespondierende Gegenkontur benachbarter Statorpakete so ausgeformt sind, dass bei gekrümmten Fahrwegabschnitten auftretende unterschiedliche Polygonzuglängen paralleler Langstatoren durch eine Überlappung ausgeglichen werden. Hierbei kann auch vorgesehen werden, dass bei gekrümmten Fahrwegabschnitten anders geformte Stoßflächen Verwendung finden.

Die für den Fahrweg beschriebenen Merkmale gelten jeweils auch für einen Bausatz, einen Träger, oder ein Statorpaket. Der erfindungsgemäße Bausatz, der Träger sowie das Statorpaket führen, wenn sie bei der Herstellung von Fahrwegen verwendet werden, zu den bereits beschriebenen Vorteilen.

Die Erfindung wird im folgenden anhand der Figuren näher erläutert. Es zeigen
- **Figur 1**: einen Teil des Fahrweges im Querschnitt,
- **Figur 2**: ein Funktionsteil mit Statorträger und Statorpaketen im Längsschnitt,
- **Figur 3**: eine vergrößerte Darstellung der Stoßenden benachbarter Statorpakete,
- **Figur 4**: eine perspektivische Darstellung eines Statorpaketes,
- **Figur 5**: ein Statorpaket im Längsschnitt,
- **Figur 6**: eine perspektivische Darstellung eines Funktionsteiles und eines daran angeordneten Statorabschnittes,
- **Figur 7**: zeigt einen Teil eines Funktionsteiles mit Statorträger und Statorpaket,
- **Figur 8**: zeigt eine vergrößerte Darstellung des Stoßbereiches zweier benachbarter Statorpakete.

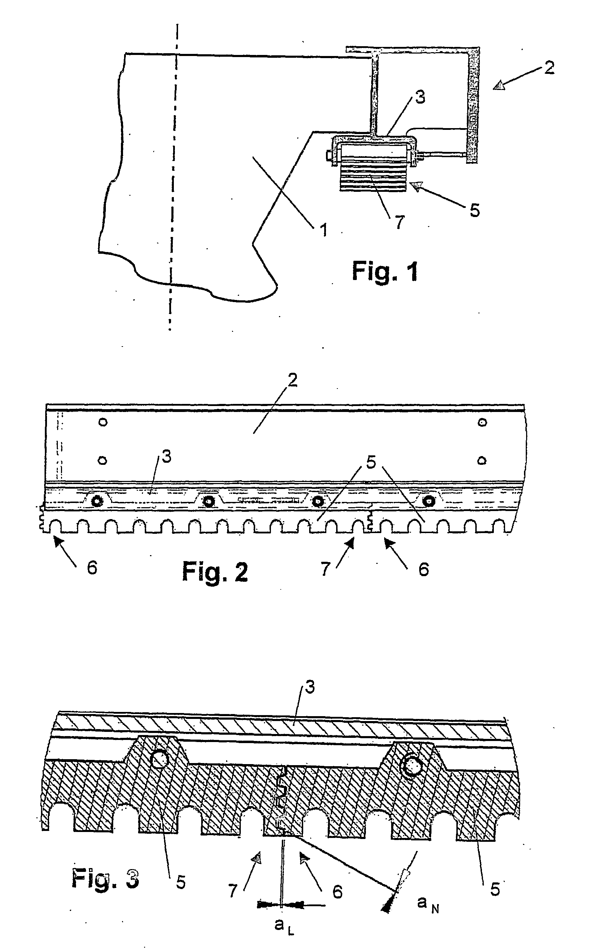

Figur 1 zeigt einen Teil eines Querschnittes eines Trägers 1, an dessen Seite ein Funktionsteil 2 angeordnet ist. Das Funktionsteil 2 weist einen U-förmigen Statorträger 3 auf, an dem ein Statorpaket 5 angeordnet ist. Zur Unterdrückung von Wirbelströmen kann das Statorpaket 5 aus gegeneinander isolierten Statorblechen gebildet werden.

Figur 2 zeigt einen Teil des Längsschnittes durch den Fahrweg. Am Funktionsteil 2 ist ein Statorträger 3 angeordnet, an dem Statorpakete 5 mit jeweils drei Bolzen befestigt sind. Die dargestellten Stoßenden 6, 7 der Statorpakete 5 weisen Erhöhungen und Vertiefungen auf, so dass eine vertikal wirkende Verzahnung gebildet wird. Lösen sich beispielsweise der rechte und der mittlere Bolzen des linken Statorpaketes 5, so wird dieses dennoch durch die Verzahnung und das U-förmige Profil des Statorträgers in seiner Lage gehalten. Gründe für ein Lösen der Bolzen können beispielsweise im Fahrbetrieb auftretende Erschütterungen, Korrosionsschäden oder Montagefehler sein. Insgesamt ist hier eine redundante Befestigung der einzelnen Statorpakete gewährleistet, so dass im Hochgeschwindigkeitsfahrbetrieb eine Berührung eines Fahrzeuges mit einem Statorpaket vermieden wird.

Figur 3 zeigt einen Ausschnitt eines Längsschnittes des selben Fahrweges im Bereich der Stoßenden 6, 7 benachbarter Statorpakete 5. Die Stoßenden 6, 7 der benachbarten Statorpakete 5 weisen eine vertikal wirkende Verzahnung auf. Der in Längsrichtung gemessene Spalt zwischen den benachbarten Statorpaketen 5 weist die Breite a_{L} auf und umfasst den Dehnungsspalt sowie den Montagespalt. Der Normalabstand aN benachbarter Zahnflanken ist deutlich geringer als der Längsspalt a_{L}. Dies bewirkt, dass zumindest ein Teil der Feldlinien des Wanderfeldes und/oder des Erregerfeldes im Bereich der Zahnflanken von einem zum anderen Statorpaket 5 übergeht. Der effektiv wirksame Magnetspalt wird so verringert.

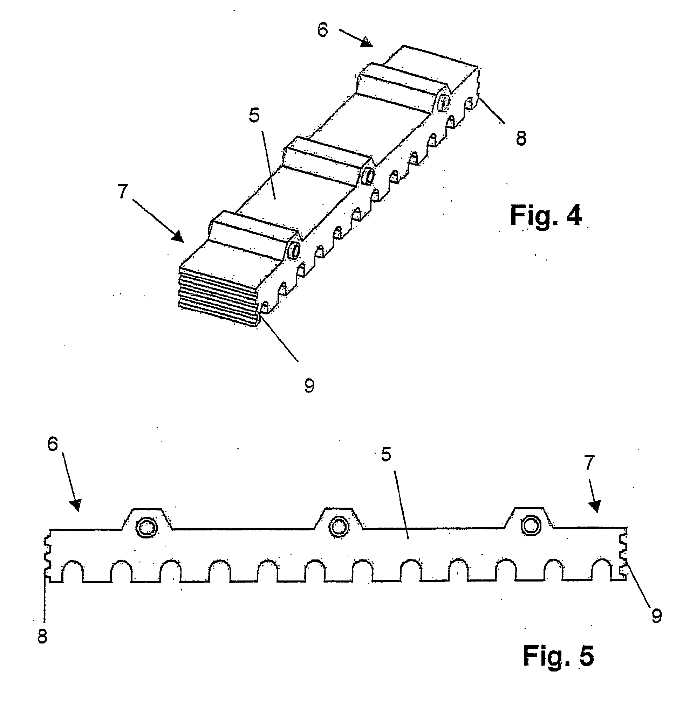

Die Figur 4 zeigt eine räumliche Darstellung eines erfindungsgemäßen Statorpaketes 5. Das Statorpaket weist ein vorderes und ein hinteres Stoßende 6, 7 auf, wobei das vordere Stoßende 6 eine Kontur 8 und das hintere Stoßende 7 eine korrespondierende Gegenkontur 9 aufweisen. Die Kontur 8 und Gegenkontur 9 weisen zur Bildung einer näherungsweise vertikal wirkenden Verzahnung korrespondierende Vertiefungen und Erhöhungen auf, wobei deren Flanken im wesentlichen parallel zur Fahrebene verlaufen. Die Flanken sind dabei zur Erleichterung der Montage benachbarter Statorpakete an den Statorträger 3 abgeschrägt. Figur 5 zeigt das Statorpaket 5 im Längsschnitt.

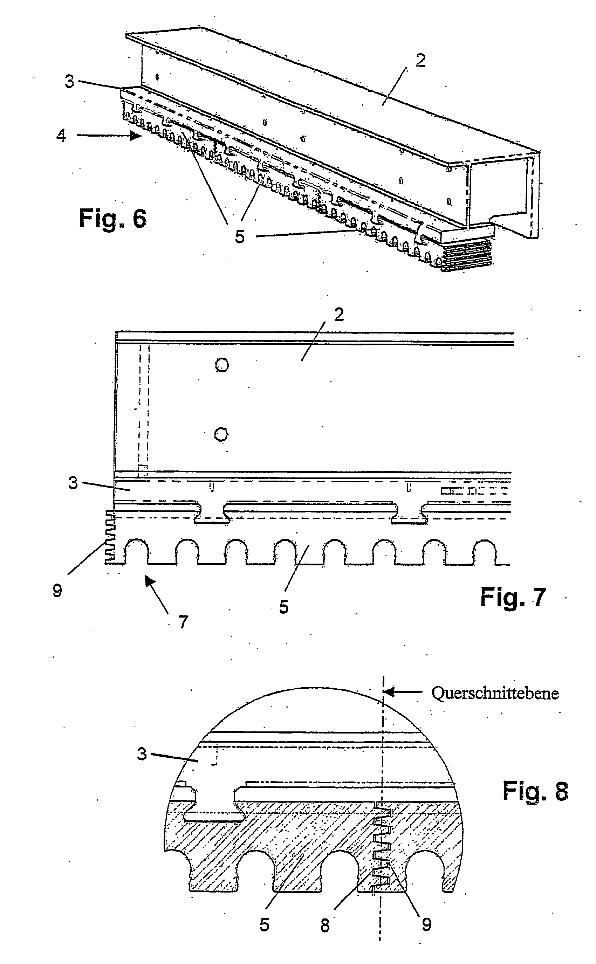

Ein weiteres Ausführungsbeispiel der vorliegenden Erfindung zeigt Figur 6. Dargestellt ist eine perspektivische Ansicht eines Funktionsteiles 2 mit Statorträger 3 und einem daran angeordneten Statorabschnitt 4, der aus drei Statorpaketen 5 gebildet wird. Die Statorpakete sind dabei mit formschlüßig in Hinterschnitte von Nuten greifenden, traversenartigen Verbindungselementen am Statorträger befestigt. Der Längsspalt a_{L} zwischen Statorpaketen, die an einem Funktionsteil 2 angeordnet sind, beträgt typischerweise 2 mm, der Längsspalt a_{L} an den Übergängen der Funktionsteile 2 kann vorteilhafterweise mit beispielsweise 4 mm deutlich größer gewählt werden.

Figur 7 zeigt ein Ausschnitt eines Längsschnittes der selben Anordnung.

Figur 8 zeigt einen vergrößerten Ausschnitt im Bereich aufeinander treffender Stoßenden 6, 7 zweier Statorpakete 5. Das vordere und das hintere Stoßende 6, 7 weisen eine Kontur 8 und eine korrespondierende Gegenkontur 9 auf, die aus der gezeigten Querschnittsebene herausragen. Im dargestellten Beispiel können die Statorpakete zur Montage seitlich in den Statorträger eingeschoben werden und anschließend mittels z. B. einer Klebetechnik fixiert werden.

Die vorliegende Erfindung ist nicht auf die dargestellten und beschriebenen Ausführungsbeispiele beschränkt. Es sind Abwandlungen im Rahmen der Patentansprüche möglich.

## Patentansprüche

1. Fahrweg für ein spurgebundenes Fahrzeug mit einem wenigstens einen Langstator aufweisenden Langstator-Linearantrieb, mit einer Vielzahl von längs einer Trasse angeordneten Fahrwegelementen, umfassend einen Träger (1), wenigstens ein an dem Träger angeordnetes Funktionsteil (2), wobei das Funktionsteil (2) wenigstens einen längs der Trasse angeordneten Statorträger (3) mit wenigstens einem Statorabschnitt (4) aufweist und der Statorabschnitt (4) aus einem oder mehreren Statorpaketen (5) mit einem vorderen Stoßende (6) und einem hinteren Stoßende (7) zusammengesetzt ist und die Längserstreckung des vorderen Stoßendes (6) eine aus einer Querschnittebene der Statorpakete (5) herausragende räumliche Kontur (8) und die Längserstreckung des hinteren Stoßendes (7) eine mit der Kontur (8) korrespondierende räumliche Gegenkontur (9) aufweist, wobei das vordere Stoßende (6) und das hintere Stoßende (7) benachbarter Statorpakete (5) eine Überlappung in Längsrichtung aufweisen, **dadurch gekennzeichnet, dass** die Kontur (8) und die Gegenkontur (9) zur Bildung einer Verzahnung korrespondierende Vertiefungen und Erhöhungen aufweisen und dass benachbarte Statorpakete (5) so miteinander verzahnt sind, dass bei Versagen der Aufhängung eines Statorpaketes (5) das Statorpaket (5) auf die Verzahnung des anderen Statorpaketes (5) absackt und den Fehler dadurch offenbart.

2. Fahrweg nach dem vorherigen Anspruch, **dadurch gekennzeichnet, dass** die Kontur (8) und die Gegenkontur (9) so ausgeformt sind, dass die Kontur (8) und die Gegenkontur (9) durch eine Verschiebung parallel der Längsachse des Statorpaketes (5) ineinander überführbar sind.

3. Fahrweg nach einem der vorherigen Ansprüche, **dadurch gekennzeichnetudass** die Kontur (8) und die Gegenkontur (9) so ausgeformt sind, dass sie, zumindest näherungsweise, zwei parallele ebene Schrägflächen aufweisen.

4. Fahrweg nach einem der vorherigen Ansprüche, **dadurch gekennzeichnet, dass** die Kontur (8) und die Gegenkontur (9) so ausgeformt sind, dass sie durch korrespondierende, zumindest näherungsweise ebene Flächen begrenzt sind.

5. Fahrweg nach einem der vorherigen Ansprüche, **dadurch gekennzeichnet, dass** die Kontur (8) und die Gegenkontur (9) so ausgeformt sind, dass sie, zumindest näherungsweise, zwei korrespondierende Treppenprofile aufweisen.

6. Fahrweg nach einem der vorherigen Ansprüche, **dadurch gekennzeichnet, dass** die Kontur (8) und die Gegenkontur (9) zur Bildung einer zumindest näherungsweise vertikal wirkenden Verzahnung korrespondierende Vertiefungen und Erhöhungen aufweisen, deren Flanken im wesentlichen parallel zur Fahrebene verlaufen.

7. Fahrweg nach einem der vorherigen Ansprüche, **dadurch gekennzeichnet, dass** die Kontur (8) und die Gegenkontur (9) zur Bildung einer zumindest näherungsweise quer zur Fahrtrichtung wirkenden Verzahnung korrespondierende Vertiefungen und Erhöhungen aufweisen, deren Flanken im wesentlichen parallel zu einer Längsschnittebene des Statorpaketes verlaufen.

8. Fahrweg nach einem der vorherigen Ansprüche, **dadurch gekennzeichnet, dass** die Kontur (8) und die Gegenkontur (9) zur Bildung einer vertikal und horizontal wirkenden Verzahnung korrespondierende Vertiefungen und Erhöhungen aufweisen, deren Flanken in einer Querschnittebene des Statorpaketes kreuzend ausgerichtet sind.

9. Fahrweg nach einem der vorherigen Ansprüche, **dadurch gekennzeichnet, dass** die Kontur (8) und die Gegenkontur (9) zur Bildung einer in Längsrichtung wirkenden Verkrallung korrespondierende und zumindest teilweise hintergreifende Flanken aufweisen.

10. Fahrweg nach einem der vorherigen Ansprüche, **dadurch gekennzeichnet, dass** die Kontur (8) und die Gegenkontur (9) so ausgeformt sind, dass die Kontur (8) und die Gegenkontur (9) durch eine Drehung um die Hochachse des Statorpaketes (5) ineinander überführbar sind.

11. Fahrweg nach einem der vorherigen Ansprüche, **dadurch gekennzeichnet, dass** die Kontur (8) und die Gegenkontur (9) zur Bildung einer vertikal und horizontal wirkenden Verzahnung korrespondierende Vertiefungen und Erhöhungen aufweisen, die nach Art eines Schachbrettes angeordnet sind.

12. Fahrweg nach einem der vorherigen Ansprüche, **dadurch gekennzeichnet, dass** die Kontur (8) und die Gegenkontur (9) korrespondierende Flächen und/oder Kanten aufweisen, die zur Erleichterung der Montage, Abschrägungen und/oder Fasen aufweisen.

13. Fahrweg nach einem der vorherigen Ansprüche, **dadurch gekennzeichnet, dass** die Kontur (8) und die Gegenkontur (9) so ausgeformt sind, dass benachbarte und überlappende Statorpakete gegeneinander bezüglich der Hoch-, Quer- und/oder Längsachse verdrehbar sind.

14. Fahrweg nach einem der vorherigen Ansprüche, **dadurch gekennzeichnet, dass** der materielle Spalt zwischen benachbarten Statorpaketen (5) innerhalb eines Statorabschnitts (4) eine andere Breite aufweist, als die Breite des materiellen Spalts zwischen benachbarten Statorpaketen (5) aneinandergrenzender Statorabschnitte (4).

15. Fahrweg nach einem der vorherigen Ansprüche, **dadurch gekennzeichnet, dass** innerhalb eines Statorabschnitts (4) benachbarte vordere und hintere Stoßenden (6, 7) eine erste räumliche Kontur (8) und korrespondierende Gegenkontur (9) sowie benachbarte vordere und hintere Stoßenden (6, 7), die unterschiedlichen Statorpaketen angehören, eine zweite räumliche Kontur (8) und korrespondierende Gegenkontur (9) aufweisen.

16. Fahrweg nach einem der vorherigen Ansprüche, **dadurch gekennzeichnet, dass** die räumliche Kontur (8) und die korrespondierende Gegenkontur (9) benachbarter Statorpakete (5) einer oder mehrerer Standardlängen so ausgeformt sind, dass bei gekrümmten Fahrwegabschnitten auftretende, unterschiedliche Polygonzuglängen paralleler Langstatoren durch eine Überlappung ausgeglichen werden.

17. Statorpaket für einen Fahrweg für ein spurgebundenes Fahrzeug mit einem wenigstens einen Langstator aufweisenden Langstator-Linearantrieb, mit einer Vielzahl von längs einer Trasse angeordneten Statorabschnitten (4), wobei die Statorabschnitte (4) aus einem oder mehreren Statorpaketen (5), mit einem vorderen Stoßende (6) und einem hinteren Stoßende (7) zusammengesetzt sind, die Längserstreckung des vorderen Stoßendes (6) eine aus einer Querschnittebene der Statorpakete (5) herausragende räumliche Kontur (8) und die Längserstreckung des hinteren Stoßendes (7) eine mit der Kontur (8) korrespondierende räumliche Gegenkontur (9) aufweist, wobei das vordere Stoßende (6) und das hintere Stoßende (7) benachbarter Statorpakete (5) eine Überlappung in Längsrichtung aufweisen, **dadurch gekennzeichnet, dass** die Kontur (8) und die Gegenkontur (9) zur Bildung einer Verzahnung korrespondierende Vertiefungen und Erhöhungen aufweisen und dass in dem Fahrweg benachbarte Statorpakete (5) so miteinander verzahnbar sind, dass bei Versagen der Aufhängung eines Statorpaketes (5) das Statorpaket (5) auf die Verzahnung des anderen Statorpaketes (5) absackt und den Fehler dadurch offenbart.

## Claims

1. A track for a railborne vehicle with a long-stator linear drive comprising at least one long stator, with a plurality of track elements arranged along a line, comprising a carrier (1), at least one functional part (2) arranged on the carrier, which functional part (2) comprises at least one stator carrier (3) arranged along the line with at least one stator section (4), which stator section (4) is composed of one or more stator packets (5) with a front (6) and a back (7) joining end, and the longitudinal extension of the front joining end (6) has a spatial contour (8) extending out of a cross-sectional plane of the stator packets (5), and the longitudinal extension of the back joining end (7) has a spatial countercontour (9) corresponding with the contour (8), and the front joining end (6) and the back joining end (7) of adjacent stator packets (5) overlap in the longitudinal direction, **characterized in that** the contour (8) and the countercontour (9) have corresponding recesses and elevations in order to form a cogging and that adjacent stator packets (5) are cogged to each other in such a manner that upon the failure of the suspension of a stator packet (5) the stator packet (5) drops onto the cogging of the other stator packet (5) and thus reveals the defect.

2. The track according to the previous claim, **characterized in that** the contour (8) and the countercontour (9) are designed in such a manner that the contour (8) and the countercontour (9) can be fitted into one another by being shifted parallel to the longitudinal axis of the stator packet (5).

3. The track according to one of the previous claims, **characterized in that** the contour (8) and the countercontour (9) are designed in such a manner that they have at least approximately two parallel, level, oblique surfaces.

4. The track according to one of the previous claims, **characterized in that** the contour (8) and the countercontour (9) are designed in such a manner that they are limited by corresponding, at least approximately level surfaces.

5. The track according to one of the previous claims, **characterized in that** the contour (8) and the countercontour (9) are designed in such a manner that they have at least approximately two corresponding stepped profiles.

6. The track according to one of the previous claims, **characterized in that** the contour (8) and the countercontour (9) have corresponding recesses and elevations whose flanks run substantially parallel to the travel plane in order to form an at least approximately vertically acting cogging.

7. The track according to one of the previous claims, **characterized in that** the contour (8) and the countercontour (9) have corresponding recesses and elevations whose flanks run substantially parallel to a longitudinal sectional plane of the stator packet in order to form a cogging acting at least approximately transversely to the direction of travel.

8. The track according to one of the previous claims, **characterized in that** the contour (8) and the countercontour (9) have corresponding recesses and elevations whose flanks are aligned in a crossing manner in a cross-sectional plane of the stator packet in order to form an a vertically and horizontally acting cogging.

9. The track according to one of the previous claims, **characterized in that** the contour (8) and the countercontour (9) have corresponding flanks extending at least partially behind one another in order to form an engagement acting in the longitudinal direction.

10. The track according to one of the previous claims, **characterized in that** the contour (8) and the countercontour (9) are designed in such a manner that the contour (8) and the countercontour (9) can be brought into one another by a rotation about the vertical axis of the stator packet (5).

11. The track according to one of the previous claims, **characterized in that** the contour (8) and the countercontour (9) have corresponding recesses and elevations arranged like a chessboard in order to form a vertically and horizontally acting cogging.

12. The track according to one of the previous claims, **characterized in that** the contour (8) and the countercontour (9) have corresponding surfaces and/or edges with bevelings and/or chamfers to facilitate the mounting.

13. The track according to one of the previous claims, **characterized in that** the contour (8) and the countercontour (9) are designed in such a manner that adjacent and overlapping stator packets can rotate against each other as concerns the vertical axis, transverse axis and/or longitudinal axis.

14. The track according to one of the previous claims, **characterized in that** the material gap between adjacent stator packets (5) within a stator section (4) has a different width than the width of the material gap between adjacent stator packets (5) of stator sections (4) bordering on each other.

15. The track according to one of the previous claims, **characterized in that** front and back joining ends (6, 7) that are adjacent within a stator section (4) have a first spatial contour (8) and corresponding countercontour (9) and that adjacent front and back joining ends (6, 7) belonging to different stator packets have a second spatial contour (8) and corresponding countercontour (9).

16. The track according to one of the previous claims, **characterized in that** the spatial contour (8) and the corresponding countercontour (9) of adjacent stator packets (5) of one or several standard lengths are designed in such a manner that different polygonal course lengths of parallel long stators occurring in curved track sections are compensated by an overlapping.

17. A stator packet for a track for a railborne vehicle with a long-stator linear drive comprising at least one long stator, with a plurality of stator sections (4) arranged along a line, which stator sections (4) are composed of one or several stator packets (5) with a front (6) and a back (7) joining end, the longitudinal extension of the front joining end (6) having a spatial contour (8) extending out of a cross-sectional plane of the stator packets (5), and the longitudinal extension of the back joining end (7) having a spatial countercontour (9) corresponding to the contour (8), the front joining end (6) and the back joining end (7) of adjacent stator packets (5) overlapping in the longitudinal direction **characterized in that** the contour (8) and the countercontour (9) have corresponding recesses and elevations in order to form a cogging and that stator packets (5) adjacent in a track are cogged to each other in such a manner that upon the failure of the suspension of a stator packet (5) the stator packet (5) drops onto the cogging of the other stator packet (5) and thus reveals the defect.

## Revendications

1. Voie de circulation pour véhicule ferroviaire comportant au moins un entraînement linéaire à stator longitudinal, avec une pluralité d'éléments de voie de circulation agencés le long d'une voie ferrée, une poutre de circulation (1) et au moins un élément fonctionnel (2) fixé à la poutre de circulation, dans laquelle l'élément fonctionnel (2) comporte au moins un support de stator (3) agencé le long de la voie ferrée avec au moins une section de stator (4) et dans laquelle la section de stator (4) est assemblée à partir d'un ou plusieurs paquets de stator (5) avec une extrémité de butée avant (6) et une extrémité de butée arrière (7) et où l'étendue longitudinale de l'extrémité de butée avant (6) comporte un contour tridimensionnel (8) saillant d'une section transversale des paquets de stator (5) et où l'étendue longitudinale de l'extrémité de butée arrière (7) comporte un contour complémentaire tridimensionnel (9) correspondant au contour (8), moyennant quoi l'extrémité de butée avant (6) et l'extrémité de butée arrière (7) de paquets de stator adjacents (5) se chevauchent longitudinalement, **caractérisée en ce que** le contour (8) et le contour complémentaire (9) comportent des rainures et échancrures correspondantes constituant un engrenage et **en ce que** les paquets de stator adjacents (5) sont engrenés les uns dans les autres de telle sorte qu'en cas de dysfonctionnement de la suspension d'un paquet de stator (5), celui-ci s'abaisse sur l'engrenage de l'autre paquet de stator (5) et révèle ainsi la défectuosité.

2. Voie de circulation selon la revendication précédente, **caractérisée en ce que** le contour (8) et le contour complémentaire (9) sont conformés de telle sorte que le contour (8) et le contour complémentaire (9) peuvent glisser l'un dans l'autre selon un déplacement parallèle à l'axe longitudinal du paquet de stator (5).

3. Voie de circulation selon l'une des revendications précédentes, **caractérisée en ce que** le contour (8) et le contour complémentaire (9) sont conformés de telle sorte qu'ils présentent au moins approximativement deux chanfreins plans et parallèles.

4. Voie de circulation selon l'une des revendications précédentes, **caractérisée en ce que** le contour (8) et le contour complémentaire (9) sont conformés de telle sorte qu'ils sont limités par des surfaces correspondantes au moins approximativement planes.

5. Voie de circulation selon l'une des revendications précédentes, **caractérisée en ce que** le contour (8) et le contour complémentaire (9) sont conformés de telle sorte qu'ils présentent au moins approximativement deux profils échelonnés correspondants.

6. Voie de circulation selon l'une des revendications précédentes, **caractérisée en ce que** le contour (8) et le contour complémentaire (9) comportent des rainures et échancrures correspondantes constituant un engrenage à fonctionnement au moins approximativement vertical, dont les flancs se déplacent de façon essentiellement parallèle à la surface de circulation.

7. Voie de circulation selon l'une des revendications précédentes, **caractérisée en ce que** le contour (8) et le contour complémentaire (9) comportent des rainures et échancrures correspondantes constituant un engrenage à fonctionnement au moins approximativement perpendiculaire à la direction de circulation, dont les flancs sont essentiellement parallèles à une section longitudinale du paquet de stator.

8. Voie de circulation selon l'une des revendications précédentes, **caractérisée en ce que** le contour (8) et le contour complémentaire (9) comportent des rainures et échancrures correspondantes constituant un engrenage à fonctionnement vertical et horizontal, dont les flancs sont orientés de façon entrecroisée dans une section transversale du paquet de stator.

9. Voie dé circulation selon l'une des revendications précédentes, **caractérisée en ce que** le contour (8) et le contour complémentaire (9) comportent des flancs correspondants et à prise au moins partiellement postérieure, constituant un engrenage à fonctionnement longitudinal.

10. Voie de circulation selon l'une des revendications précédentes, **caractérisée en ce que** le contour (8) et le contour complémentaire (9) sont conformés de telle sorte que le contour (8) et le contour complémentaire (9) peuvent glisser l'un dans l'autre par pivotement autour de l'axe vertical du paquet de stator (5).

11. Voie de circulation selon l'une des revendications précédentes, **caractérisée en ce que** le contour (8) et le contour complémentaire (9) comportent des rainures et échancrures correspondantes constituant un engrenage à fonctionnement vertical et horizontal et agencées en forme de damier.

12. Voie de circulation selon l'une des revendications précédentes, **caractérisée en ce que** le contour (8) et le contour complémentaire (9) comportent des surfaces et/ou bords correspondants présentant des chanfreins et/ou biseaux pour faciliter le montage.

13. Voie de circulation selon l'une des revendications précédentes, **caractérisée en ce que** le contour (8) et le contour complémentaire (9) sont conformés de telle sorte que les paquets de stator adjacents et se chevauchant peuvent pivoter l'un par rapport à l'autre relativement à l'axe vertical, transversal et/ou longitudinal.

14. Voie de circulation selon l'une des revendications précédentes, **caractérisée en ce que** l'écartement matériel entre des paquets de stator adjacents (5) d'une même section de stator (4) présente une largeur différente de celle de l'écartement matériel entre des paquets de stator adjacents (5) de sections de stator contiguës (4).

15. Voie de circulation selon l'une des revendications précédentes, **caractérisée en ce que**, au sein d'une section de stator (4), les extrémités de butée avant et arrière adjacentes (6, 7) comportent un premier contour tridimensionnel (8) et un contour complémentaire correspondant (9) et les extrémités de butée avant et arrière adjacentes (6, 7) appartenant à différents paquets de stator comportent un second contour tridimensionnel (8) et un contour complémentaire correspondant (9).

16. Voie de circulation selon l'une des revendications précédentes, **caractérisée en ce que** le contour tridimensionnel (8) et le contour complémentaire correspondant (9) de paquets de stator adjacents (5) d'une ou plusieurs longueurs standard sont conformés de telle sorte que dans les sections courbes de la voie de circulation, les différentes longueurs de train polygonales de stators longitudinaux parallèles sont compensées par un chevauchement.

17. Paquet de stator de voie de circulation pour véhicule ferroviaire comportant au moins un entraînement linéaire à stator longitudinal, avec une pluralité de sections de stator (4) agencées le long d'une voie ferrée, dans lequel la section de stator (4) est assemblée à partir d'un ou plusieurs paquets de stator (5), avec une extrémité de butée avant (6) et une extrémité de butée arrière (7), dans lequel l'étendue longitudinale de l'extrémité de butée avant (6) comporte un contour tridimensionnel (8) saillant d'une section transversale des paquets de stator (5) et dans lequel l'étendue longitudinale de l'extrémité de butée arrière (7) comporte un contour complémentaire tridimensionnel (9) correspondant au contour (8), moyennant quoi l'extrémité de butée avant (6) et l'extrémité de butée arrière (7) de paquets de stator adjacents (5) se chevauchent longitudinalement, **caractérisé en ce que** le contour (8) et le contour complémentaire (9) comportent des rainures et échancrures correspondantes constituant un engrenage et **en ce que** les paquets de stator adjacents (5) de la voie de circulation sont engrenés les uns dans les autres de telle sorte qu'en cas de dysfonctionnement de la suspension d'un paquet de stator (5), celui-ci s'abaisse sur l'engrenage de l'autre paquet de stator (5) et révèle ainsi la défectuosité.
